# EUROPÄISCHE PATENTANMELDUNG

(11) **EP 0 984 381 A1**
(43) Veröffentlichungstag der Anmeldung: **08.03.2000**
(21) Anmeldenummer: 99112110.4
(22) Anmeldetag: 23.06.1999
(51) Int. Cl.: G06K 7/10

(54) **Barcodeleser mit mobiler Speichervorrichtung**

(30) Priorität: 31.08.1998 DE 19839564
(71) Anmelder: Sick AG, 79183 Waldkirch, Breisgau (DE)
(72) Erfinder: Drayss, Urban, 79183 Waldkirch (DE); Aschenbrenner, Johannes, 79312 Emmendingen (DE)
(74) Vertreter: Manitz, Finsterwald & Partner

(57) **Zusammenfassung**

Die Erfindung betrifft ein Verfahren zum Laden von applikationsspezifischen Parameterdaten in einen Barcodeleser (2), wobei eine mobile Speichervorrichtung (1) mit dem Barcodeleser (2) datenübertragungsfähig verbunden wird und in der mobilen Speichervorrichtung gespeicherte Parameterdaten von der Speichervorrichtung in den Barcodeleser übertragen werden. Außerdem betrifft die Erfindung eine entsprechende mobile Speichervorrichtung sowie ein Barcodelesesystem bestehend aus einer mobilen Speichervorrichtung und einem Barcodeleser.

## Beschreibung

Die Erfindung betrifft einen Bareodeleser, eine für die Bereitstellung von applikationsspezifischen Parameterdaten an den Barcodeleser vorgesehene Speichervorrichtung, sowie ein Verfahren zum Laden von applikationsspezifischen Parameterdaten in einen Barcodeleser.

Es ist bekannt, die für eine bestimmte Anwendung vorgesehenen Parameterdaten innerhalb eines in dem Barcodeleser integrierten Programmspeichers zu speichern und somit für diese Anwendung dem Barcodeleser bereitzustellen. Diese Parameterdaten werden vor dem Betrieb des Barcodelesers beispielsweise über einen Computer in den integrierten Programmspeicher des Barcodelesers eingegeben. Hierfür wird der Computer vorübergehend über ein Datenübertragungskabel mit dem Barcodeleser verbunden.

Es ist ein Nachteil der bekannten Barcodeleser und des erläuterten Verfahrens, daß zur Eingabe der Parameterdaten in den Barcodeleser, beispielsweise beim Austausch eines defekten oder beschädigten Barcodelesers, eigens ein Computer mit dem Barcodeleser verbunden werden muß. Außerdem erfordert das Laden der Parameterdaten in den Barcodelesers mittels des Computers eine gewisse Qualifikation des Bedienungspersonals.

Es ist eine Aufgabe der Erfindung, ein Verfahren und eine Vorrichtung zu schaffen, die das Laden von applikationsspezifischen Parameterdaten in einen Barcodeleser auf einfache und flexible Weise ermöglichen.

Diese Aufgabe wird zum einen durch ein Verfahren gelöst, bei dem zunächst eine mobile Speichervorrichtung, insbesondere eine externe Computer-Steckkarte, mit dem Barcodeleser datenübertragungsfähig verbunden wird und anschließend in dieser mobilen Speichervorrichtung gespeicherte Parameterdaten von der mobilen Speichervorrichtung in den Barcodeleser übertragen werden.

Zum anderen wird die Aufgabe der Erfindung durch eine derartige mobile, nicht zu dem Barcodeleser integral zugehörige Speichervorrichtung gelöst und durch ein Barcodelesesystem, das aus einer solchen mobilen Speichervorrichtung sowie einem für die zeitweilige Aufnahme dieser Speichervorrichtung geeigneten Barcodeleser besteht.

Erfindungsgemäß ist also vorgesehen, die für eine bestimmte Anwendung relevanten Parameterdaten zunächst auf der tragbaren Speichervorrichtung zu speichern und die Parameterdaten anschließend - nachdem die Speichervorrichtung mit dem Barcodeleser unmittelbar oder über ein Zwischenkabel oder eine zusätzliche Box verbunden worden ist - in den Barcodeleser zu laden. Vor dem Verbinden der Speichervorrichtung mit dem Barcodeleser können die Parameterdaten von einem Computer in die Speichervorrichtung übertragen werden. Dagegen braucht die mobile Speichervorrichtung selbst kein eigenes Dateneingabemittel, insbesondere keine Tastatur aufweisen.

Die Erfindung ermöglicht somit ein besonders einfaches Laden der Parameterdaten in den Barcodeleser, da hierfür die tragbare Speichervorrichtung beispielsweise lediglich von außen in eine entsprechende Kontakteinrichtung an dem Barcodeleser eingesteckt wird. Dieser Vorgang erfordert unabhängig von der Komplexität der Parameterdaten keine besondere Qualifikation des Bedienungspersonals. Außerdem muß nicht eigens ein Dateneingabemittel, insbesondere ein Computer mit Tastatur, zu dem Barcodeleser gebracht und mit diesem über ein Datenübertragungskabel verbunden werden, um die Parameterdaten in den Programmspeicher des Barcodelesers zu laden. Stattdessen kann die mobile Speichervorrichtung an zentraler Stelle von einem Computer mit den applikationsspezifischen Parameterdaten belegt werden.

Hieraus ergibt sich überdies die vorteilhafte Möglichkeit, die jeweils benötigten Parameterdaten von entfernter Stelle, beispielsweise von einem Servicezentrum, über das Telefonnetz oder das Internet auf den zentralen Computer zu überspielen, um dort ständig die aktuell benötigten Parameterdaten für die Übertragung auf die mobile Speichervorrichtung bereitstellen zu können. Auf diese Weise können Servicekosten reduziert werden.

Weiterhin erleichtert die Erfindung ein schnelles Auswechseln eines defekten Barcodelesers durch ein Austauschexemplar, da zum Laden der für die aktuelle Anwendung benötigten Parameterdaten in das Austauschexemplar lediglich die mobile Speichervorrichtung von dem defekten Barcodeleser zu entfernen und stattdessen mit dem Austauschexemplar zu verbinden ist. Bei einem modularen Aufbau des Barcodelesers kann die Speichervorrichtung gegebenenfalls mit einem noch funktionsfähigen und somit nicht auszutauschenden Teil des Barcodelesers verbunden bleiben. Beispielsweise kann eine für die Aufnahme der Speichervorrichtung vorgesehene Kontakteinrichtung an einem Netzgerät des Barcodelesers vorgesehen sein, das wiederum von einem defekten Leseteil getrennt und mit einem neuen Leseteil verbunden werden kann.

Es ist möglich, daß die Parameterdaten für eine bestimmte Anwendung lediglich einmalig von der Speichervorrichtung in den Bareodeleser eingelesen werden, und zwar automatisch nach dem Einschalten des Barcodelesers, nach Betätigung einer entsprechenden Befehlstaste an dem Barcodeleser und/oder nach dem Verbinden der Speichervorrichtung mit einer entsprechenden Kontakteinrichtung an dem Barcodeleser. Dadurch können in vorteilhafter Weise bei Verwendung einer einzigen Speichervorrichtung mehrere Barcodeleser mit denselben Parameterdaten versehen werden, indem die Speichervorrichtung nacheinander mit den Barcodelesern verbunden wird und dabei die Parameterdaten jeweils in einen in dem betreffenden Barcodeleser integrierten Datenspeicher eingelesen werden.

Alternativ hierzu kann der Barcodeleser dergestalt ausgebildet sein, daß die Speichervorrichtung selbst als Datenspeicher des Barcodelesers dient. In diesem Fall muß der Barcodeleser also keinen eigenen, integrierten Datenspeicher für die Parameterdaten aufweisen. Für den Betrieb des Barcodelesers ist dieser ständig mit der Speichervorrichtung verbunden, damit bei Bedarf von dem Barcodeleser auf die in der Speichervorrichtung enthaltenen Parameterdaten zugegriffen werden kann.

Die erfindungsgemäße mobile Barcodeleser-Speichervorrichtung kann einen einfachen Aufbau aufweisen lediglich mit einem nichtflüchtigen Datenspeicher, einer Eingangsschnittstelle und einer Ausgangsschnittstelle, wobei die Eingangsschnittstelle und die Ausgangsschnittstelle eine einzige Schnittstelle bilden können. Der Datenspeicher kann beispielsweise als EEPROM ausgebildet sein. Die Speichervorrichtung kann zusätzlich einen Mikroprozessor aufweisen, durch den mittels entsprechender Treiber-Software alle Datenübertragungsvorgänge gesteuert werden.

In einer besonders vorteilhaften Ausführungsform besitzt die mobile Speichervorrichtung die Bauform einer herkömmlichen Computer-Steckkarte. Diese Computer-Steckkarte wird erfindungsgemäß zum Einspeisen der applikationsspezifischen Parameterdaten in den Bareodeleser verwendet. Vorzugsweise ist die Steckkarte hierfür mit einem Computer, von dem die Parameterdaten auf die Steckkarte übertragen werden sollen, und/oder mit dem Barcodeleser von außen verbindbar. Der erfindungsgemäße Barcodeleser oder ein Teil desselben weist zu diesem Zweck eine Kontakteinrichtung auf, die der Ausgangsschnittstelle der Computer-Steckkarte entspricht und somit die Aufnahme der Steckkarte und einen Datenaustausch ermöglicht. Die Speichervorrichtung kann auf diese Weise als Parameter Cloning Card (PCC) ausgebildet sein.

Im Rahmen der Erfindung ist es auch möglich, daß Daten, beispielsweise Betriebszustände oder -statistiken, von dem Barcodeleser an die mit dem Bareodeleser verbundene Speichervorrichtung übertragen werden. Dadurch können diese Daten anschließend mittels eines Computers von der Speichervorrichtung zum Zwecke einer weiteren Auswertung ausgelesen werden.

Schließlich ist es im Rahmen der Erfindung auch möglich, applikationsspezifische Parameterdaten mittels einer mobilen Speichervorrichtung anstelle in einen Barcodeleser in eine andere optoelektronische Sensoreinrichtung, beispielsweise in einen Lichtvorhang zu laden.

Weitere Ausführungsformen der Erfindung sind in den Ansprüchen beschrieben.

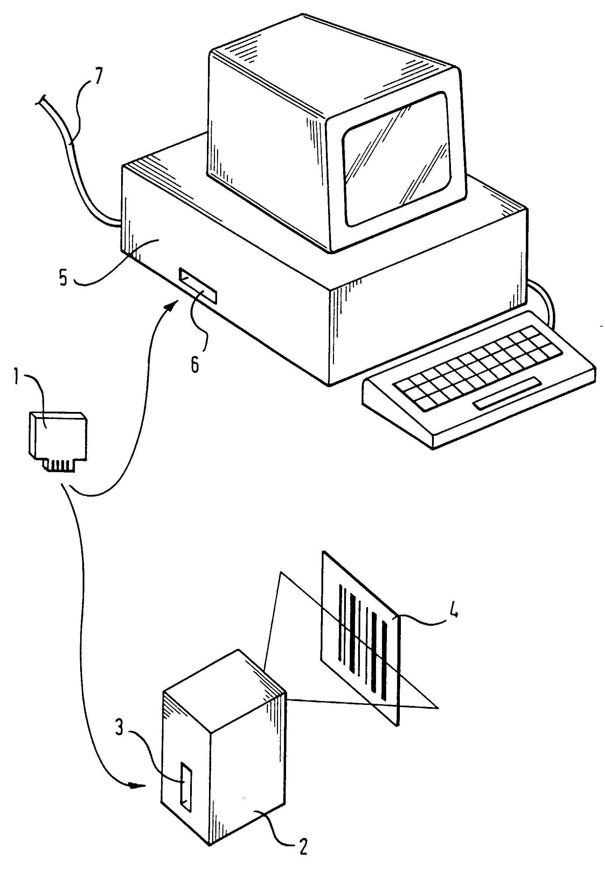

Die Erfindung wird nachfolgend beispielhaft anhand der Zeichnung erläutert. Diese zeigt eine als mobile Speichervorrichtung fungierende Steckkarte 1, einen Barcodeleser 2 mit einer Kontakteinrichtung 3, einen Barcode 4 sowie einen Computer 5 mit einer Standardschnittstelle 6 und einem Datenübertragungskabel 7.

Die Steckkarte 1 wird zunächst über die Standardschnittstelle 6 mit dem Computer 5 verbunden. Daraufhin werden die für eine geplante Anwendung des Barcodelesers erforderlichen Parameterdaten von dem Computer 5 auf die Steckkarte 1 bzw. einen in dieser enthaltenen Programmspeicher übertragen.

Anschließend wird die Steckkarte 1 von dem Computer 5 entfernt und in die Kontakteinrichtung 3 des Barcodelesers 2 eingesteckt. Danach können die in der Steckkarte 1 gespeicherten Parameterdaten von dem Barcodeleser 2 eingelesen werden.

Die aktuell jeweils benötigten Parameterdaten können dem Computer 5 mittels des Datenübertragungskabels 7 von einem entfernten Servicezentrum zugeführt werden, beispielsweise über ein Modem und das Telephonnetz oder über ein Datennetz.

### Bezugszeichenliste

- 1: Steckkarte
- 2: Barcodeleser
- 3: Kontakteinrichtung
- 4: Barcode
- 5: Computer
- 6: Standardschnittstelle
- 7: Datenübertragungskabel

## Patentansprüche

1. Verfahren zum Laden von applikationsspezifischen Parameterdaten in einen Barcodeleser (2),
**dadurch gekennzeichnet,**
daß eine mobile Speichervorrichtung (1) mit dem Barcodeleser (2) datenübertragungsfähig verbunden, insbesondere von außen steckverbunden wird, und
daß in der mobilen Speichervorrichtung (1) gespeicherte Parameterdaten von der mobilen Speichervorrichtung (1) in den Barcodeleser (2) übertragen werden.

2. Verfahren nach Anspruch 1,
**dadurch gekennzeichnet,**
daß die Parameterdaten zumindest bei dem erstmaligen Aktivieren des Barcodelesers (2) für eine bestimmte Applikation von der mobilen Speichervorrichtung (1) in den Barcodeleser (2) übertragen werden.

3. Verfahren nach einem der vorhergehenden Ansprüche,
**dadurch gekennzeichnet,**
daß vor dem Schritt des Übertragens der Parameterdaten von der mobilen Speichervorrichtung (1) in den Barcodeleser (2) und/oder vor dem Schritt des Verbindens der mobilen Speichervorrichtung (1) mit dem Barcodeleser (2)
- die mobile Speichervorrichtung (1) mit einem Computer (5) datenempfangsfähig verbunden wird, und
- die Parameterdaten von dem Computer (5) in die mobile Speichervorrichtung (1) eingelesen werden.

4. Verfahren nach Anspruch 3,
**dadurch gekennzeichnet,**
daß nach dem Schritt des Einlesens der Parameterdaten von dem Computer (5) in die mobile Speichervorrichtung (1) und vor dem Schritt des Verbindens der mobilen Speichervorrichtung (1) mit dem Barcodeleser (2) die mobile Speichervorrichtung (1) von dem Computer (5) gelöst wird.

5. Verfahren nach Anspruch 3 oder Anspruch 4,
**dadurch gekennzeichnet,**
daß vor dem Schritt des Einlesens der Parameterdaten von dem Computer in die mobile Speichervorrichtung (1) die Parameterdaten auf den Computer (5) fernübertragen werden, insbesondere über ein Telephonnetz oder über ein digitales Datennetz.

6. Barcodeleser-Speichervorrichtung (1) zur Bereitstellung von applikationsspezifischen Parameterdaten an einen Barcodeleser (2), insbesondere gemäß einem Verfahren nach einem der vorhergehenden Ansprüche,
**dadurch gekennzeichnet,**
daß die Speichervorrichtung (1) mobil und als nicht integral zu dem Barcodeleser (2) zugehörig ausgebildet ist mit
- einer Eingangsschnittstelle, durch welche die Speichervorrichtung (1) mit einer Standardschnittstelle (6) eines Computers (5) datenempfangsfähig verbindbar, insbesondere steckverbindbar ist,
- einem nichtflüchtigen Datenspeicher zum Speichern der Parameterdaten, und
- einer Ausgangsschnittstelle, durch welche die Speichervorrichtung mit dem Barcodeleser (2) datenübertragungsfähig verbindbar, insbesondere von außen steckverbindbar ist.

7. Barcodeleser-Speichervorrichtung nach Anspruch 6,
**gekennzeichnet**
durch einen Mikroprozessor, durch den der Datenempfang in der Speichervorrichtung (1) und/oder die Datenübertragung von der Speichervorrichtung (1) zu dem Barcodeleser (2) steuerbar ist.

8. Barcodeleser-Speichervorrichtung nach Anspruch 6 oder 7,
**gekennzeichnet**
durch einen nichtflüchtigen Programmspeicher, in dem Treiber-Software speicherbar ist, die für die Steuerung des Datenempfangs bzw. der Datenübertragung mittels des Mikroprozessors vorgesehen ist.

9. Barcodeleser-Speichervorrichtung nach Anspruch 8,
**dadurch gekennzeichnet,**
daß der nichtflüchtige Programmspeicher durch den nichtflüchtigen Datenspeicher gebildet ist.

10. Barcodeleser-Speichervorrichtung nach einem der Ansprüche 6 bis 9,
**dadurch gekennzeichnet,**
daß die Speichervorrichtung (1) die Bauform einer üblichen, insbesondere externen Computer-Steckkarte aufweist.

11. Barcodelesesystem mit
- einer mobilen Speichervorrichtung (1) zur Speicherung von applikationsspezifischen Parameterdaten, wobei die mobile Speichervorrichtung (1) nach einem der Ansprüche 6 bis 10 ausgebildet ist, und
- einem Barcodeleser (2), der eine Kontakteinrichtung (3) aufweist an welcher die mobile Speichervorrichtung (1) mit dem Barcodeleser (2) von außen verbindbar ist und über welche die Parameterdaten von der mobilen Speichervorrichtung (1) in den Barcodeleser (2) einlesbar sind.

12. Barcodelesesystem nach Anspruch 11,
**dadurch gekennzeichnet,**
daß die mobile Speichervorrichtung (1) mit der Kontakteinrichtung (3) des Barcodelesers (2) unmittelbar steckverbindbar ist.
